# EUROPÄISCHE PATENTSCHRIFT

(11) **EP 3 401 243 B1**
(45) Veröffentlichungstag und Bekanntmachung des Hinweises auf die Patenterteilung: **24.02.2021**
(21) Anmeldenummer: 18165974.9
(22) Anmeldetag: 05.04.2018
(51) Int. Cl.: B65G 19/24

(54) **MITNEHMER ZUR BEFESTIGUNG EINES FÖRDERORGANS AN EINER AUS KETTENGLIEDERN GEBILDETEN KETTE**
DRIVER FOR FASTENING A TRANSPORT ORGAN TO A CHAIN MADE OF CHAIN LINKS
DISPOSITIF ENTRAÎNEUR DESTINÉ À FIXER UN ORGANE DE TRANSPORT SUR UNE CHAÎNE CONSTITUÉE DE MAILLONS DE CHAÎNE

(30) Priorität: 08.05.2017 DE 102017109824
(43) Veröffentlichungstag der Anmeldung: 14.11.2018
(73) Patentinhaber: RUD Ketten Rieger & Dietz GmbH u. Co. KG, 73432 Aalen (DE)
(72) Erfinder: Wesch, Rupert Raimund, 73457 Essingen (DE); Nuding, Andreas Eugen, 73312 Geislingen a.d. Steige (DE); Schmid, Alexander, 73432 Aalen Ebnat (DE); Scherer, Peter Hans Hubert, 89522 Heidenheim (DE)
(74) Vertreter: Flügel Preissner Schober Seidel

(56) Entgegenhaltungen:
- DE-A1- 2 925 046
- DE-B- 1 023 403
- DE-C1- 3 302 754
- SU-A1- 785 140

## Beschreibung

Die vorliegende Erfindung betrifft einen Mitnehmer zur Befestigung eines Förderorgans an einer aus Kettengliedern gebildeten Kette eines Kettenförderers, aufweisend zwei Mitnehmerelemente, die lösbar miteinander verbunden sind.

Mitnehmer der eingangs genannten Art dienen zur Befestigung eines Förderorgans, wie beispielsweise einem Becher oder einem Kratzeisen, an einer Kette, insbesondere einer Gliederkette, wie beispielsweise einer Rundstahlkette, in einem Kettenförderer, wie beispielsweise einem Becherwerk oder einem Trogkettenförderer. Je nach Förderorgan laufen die Mitnehmer horizontal oder vertikal über das Kettenrad. So läuft der Mitnehmer bei einem Becher vertikal über das Kettenrad, während der Mitnehmer bei einem Kratzeisen horizontal über das Kettenrad läuft.

Zur Befestigung eines Förderorgans an einer Kette werden zumeist die aus den DIN-Normen DIN745 und DIN5699 bekannten Mitnehmer verwendet. Die genormten Mitnehmer umfassen einen Kettenbügel, der sich in den lichten Innenraum zweier Kettenglieder erstreckt, wobei der Kettenbügel jeweils endseitig mit einem angedrehten Gewinde versehen ist, um den Kettenbügel mit dem Förderorgan zu verschrauben. Die angedrehten Gewinde sind dabei auf standardisierte Bohrungen der Förderorgane abgestimmt.

Bei den aus den DIN-Normen bekannten Mitnehmern erfolgt die Befestigung des Förderorgans zwischen zwei Kettengliedern, die zu Kettenenden unterschiedlicher Gliedanzahl gehören. Dadurch werden die Zugkräfte im Kettenstrang von einem Kettenende durch den Kettenbügel in das nächste Kettenende übertragen. Somit haben die genormten Mitnehmer eine Doppelfunktion zu erfüllen, nämlich die Befestigung des Förderorgans und die Übertragung der Zugkräfte eingeleitet durch die Kette.

Neben den genormten Mitnehmern sind Mitnehmer bekannt, die einteilig oder mehrteilig ausgebildet sind und ein Förderorgan an einem einzelnen Kettenglied befestigen.

So geht aus DE 29 25 046 C2 ein zweiteilig ausgebildeter Mitnehmer für ein Förderorgan hervor, dessen beide Mitnehmerelemente ein einzelnes Kettenglied einer Kette an seinen gegenüberliegenden gekrümmten Abschnitten umgreifen. Hierzu weist jedes Mitnehmerelement einen Flansch und einen von dem Flansch gabelartig abragenden Vorsprung mit einer bogenförmigen Krümmung auf, der einen gekrümmten Abschnitt eines Kettenglieds umschließen kann. Zum Montieren der Mitnehmerelemente an dem Förderorgan werden die Vorsprünge so weit voneinander entfernt, dass sie in die lichten Innenräume der sich an das zu umgreifende Kettenglied anschließenden Kettenglieder eingeführt werden können. Die Flansche stützen sich dabei aufeinander ab und werden zwischen Schenkel einer U-förmigen Halteschiene, die an den Träger angeschweißt ist, der seinerseits mit dem Förderelement mittels Schweißen verbunden ist, festgeklemmt und verschraubt. Die DE 29 25 046 C2 offenbart den Oberbegriff des Anspruchs 1.

Ferner geht aus DE 38 28 712 A1 ein einteiliger Mitnehmer für einen mit aus ovalen Kettengliedern gebildeten Rundstahlketten betriebenen Doppelkettenkratzerförderer hervor, der ein Kettenglied außenumfangsseitig umgreift. Hierzu weist der Mitnehmer einen Grundkörper auf, auf dem zwei senkrecht abragende, gabelartige Vorsprünge angeordnet sind, die klauenartig die sich gegenüberliegenden gekrümmten Abschnitte eines Kettenglieds umgreifen.

Aus DE 198 26 760 C1 geht ein Mitnehmer zur Befestigung eines Förderorgans an einer Rundstahlkette eines Kettenförderers hervor, der zwei über eine aus einem Gewindestift gebildete zentrale Schwenkachse miteinander verbundene Mitnehmerelemente aufweist. Jedes der Mitnehmerelemente umfasst einen Grundkörper und einen in den lichten Innenraum eines Anschlusskettenglieds einführbaren Vorsprung. Die beiden Mitnehmerelemente umschließen gabelartig die Anschlusskettenglieder.

Darüber hinaus ist aus DE 10 2007 022 278 A1 ein Mitnehmer bekannt, der aus zwei Mitnehmerelementen gebildet ist. Jedes der Mitnehmerelemente weist einen an einem Förderorgan befestigbaren Grundkörper und ein von dem Grundkörper abgewinkelt abragendes Mitnehmerhorn auf, das in den lichten Innenraum eines Kettenglieds einführbar ist. Der Grundkörper umfasst eine im Wesentlichen parallel zur Kettenrichtung verlaufende Auflage- und Verschiebefläche, die formschlüssig in die Auflage- und Verschiebefläche eines weiteren Mitnehmerelements einsetzbar ist.

DE 33 02 754 C1 offenbart ein aus zwei Teilen gebildetes Kupplungsstück, das zur Verbindung eines Kratzeisens mit einer Kette eines Kratzförderers dient. Jedes der Teile weist eine Nase auf, deren Außenseiten den Außenkrümmungen der Kettenglieder entsprechend gebogen sind und zur Anlage an die gekrümmten Abschnitte der Kettenglieder ausgebildet sind. Die Teile weisen einander zugekehrten Flächen auf, die mit Nuten und Federn versehen sind und die als zusätzliche Führungsorgane dienen, die gleichzeitig ein Versetzen der Teile gegeneinander und gegenüber den Kettengliedern verhindern. Zur Befestigung der Teile an einem Kratzeisen weisen selbige an ihrer der Rinnenmitte zugekehrten Seite Anschlusslappen auf, die mit waagerechten Bohrungen versehen sind.

Des Weiteren gehen aus DE 10 23 403 B Kupplungsglieder zur Verbindung eines Förderelementes mit einem Kettenstrang hervor. Hierzu weisen die Kupplungsglieder Vorsprünge auf, die in den lichten Innenraum jeweils eines Kettenglieds eingreifen, wobei die Vorsprünge über jeweils ein Joch und ein Stegteil mit Befestigungsflanschen in Verbindung stehen, die ihrerseits mit Hilfe von Schraubbolzen und Muttern mit den Förderelementen verbunden sind. Die Vorsprünge sind an ihren den Enden der von ihnen umfassten Kettenglieder zugewandten Seiten mit in Längsrichtung der Mitnehmer verlaufenden Führungsmulden versehen.

Der Erfindung liegt die Aufgabe zugrunde, einen Mitnehmer zu schaffen, der eine verbesserte Ankopplung an einem Kettenglied, eine verbesserte Kraftübertragung der durch die Kette eingeleiteten Zugkräfte sowie eine verbesserte Montage und Demontage eines Förderorgans an dem Mitnehmer ermöglicht.

Zur Lösung der Aufgabe wird ein Mitnehmer mit den Merkmalen des Anspruchs 1 vorgeschlagen.

Vorteilhafte Ausgestaltungen des Mitnehmers sind Gegenstand der abhängigen Ansprüche.

Die vorliegende Erfindung betrifft einen Mitnehmer zur Befestigung eines Förderorgans an einer aus Kettengliedern gebildeten Kette eines Kettenförderers, aufweisend zwei Mitnehmerelemente, die über ein Verbindungselement lösbar miteinander verbunden sind, wobei jedes der Mitnehmerelemente einen Befestigungsabschnitt, der an dem Förderorgan befestigbar ist, und ein Mitnehmerhorn aufweist, das an ein Kettenglied anlegbar ist, wobei das Mitnehmerhorn eine gekrümmte Anlagefläche aufweist, die zur Anlage an einen gekrümmten Abschnitt des Kettenglieds ausgebildet ist, und wobei in die Anlagefläche eine konkave Vertiefung eingebracht ist, die derart ausgebildet ist, dass der gekrümmte Abschnitt formschlüssig und spielfrei in der Vertiefung einliegt, wobei jedes Mitnehmerelement einen Verbindungsabschnitt aufweist, die komplementär zueinander geformt sind, wobei im verbundenen Zustand der Mitnehmerelemente die zueinander komplementär geformten Verbindungsabschnitte wenigstens eine Aufnahmeöffnung und/oder einen Aufnahmeöffnungsabschnitt zum Einsetzen eines Verbindungselements bilden.

Durch die konkav oder sphärisch ausgebildete Vertiefung als Kontaktgeometrie zum Kettenglied wird eine sehr enge und spielfreie Montage sowie Ankopplung des Mitnehmers an dem Kettenglied ermöglicht. Aufgrund der spielfreien Ankopplung sind der Spielraum für Bewegungen zwischen dem Mitnehmerelement und dem Kettenglied und damit der Verschleiß am Mitnehmerelement und dem Kettenglied reduziert. Darüber hinaus werden durch das Umgreifen des Kettenglieds die auf ein Mitnehmerelement wirkenden Gewichtskräfte des Förderorgans und die von der Kette übertragenen Zugkräfte voneinander entkoppelt. Zudem ist der Förderorganabstand variabel einstellbar. Dies ist bei genormten Kettenenden in Verbindung mit genormten Kettenbügeln nicht der Fall. Im Vergleich zu den überdimensionierten genormten Kettenbügeln weist das Mitnehmerelement eine geringe Größe und somit ein niedriges Gewicht auf. Insbesondere greift das Mitnehmerhorn in den lichten Innenraum eines Kettenglieds, das sich an das zu umgreifende Kettenglied anschließt.

Durch die beiden lösbar miteinander verbundenen Mitnehmerelemente ist eine Montage der Mitnehmerelemente an einem Kettenglied außerhalb und/oder innerhalb einer Kettenförderanlage möglich. Zudem wird ein selbständiges Herausfallen der Mitnehmerelemente aus dem Kettenverbund verhindert. Darüber hinaus wird durch die lösbare Verbindung der beiden Mitnehmerelemente eine Erleichterung der Montage erzielt. Bevorzugt ist der aus den Mitnehmerelementen gebildete Mitnehmer derart gestaltet, dass der Mitnehmer geschultert nahezu im Kettenschatten über ein Kettenrad vertikal läuft.

Bevorzugt werden die beiden Mitnehmerelemente zunächst über ihre Anlageflächen an die gekrümmten Abschnitte eines Kettenglieds angelegt, indem jedes Mitnehmerhorn in einen lichten Innenraum eines sich anschließenden Kettenglieds eingeführt wird. Anschließend werden die beiden Mitnehmerelemente lösbar miteinander verbunden. Erst wenn der Mitnehmer an dem Kettenglied befestigt ist, wird das Förderorgan an dem Mitnehmer moniert. Hierzu ist es erforderlich, dass der Mitnehmer bei der Montage des Förderorgans spielfrei an dem Kettenglied anliegt und es umfasst. Dies wird durch die konkave Kontaktgeometrie sowie den lösbar miteinander verbundenen Mitnehmerelementen gewährleistet.

In einer vorteilhaften Ausgestaltung entspricht ein Krümmungsradius der konkaven Vertiefung einem Radius des gekrümmten Abschnitts des Kettenglieds. Dadurch wird eine sphärische Ausbildung der Kontaktgeometrie geschaffen, die eine enge und spielfreie Ankopplung an ein Kettenglied ermöglicht. Insbesondere liegt ein Abschnitt eines der gekrümmten Abschnitte eines Kettenglieds formschlüssig und spielfrei in der konkaven Vertiefung ein. Der Radius des gekrümmten Abschnitts entspricht dem halben Durchmesser des Kettenglieds, also der halben Dicke des Kettenglieds.

Das Verbindungselement dient als Sicherung zur Befestigung der den Mitnehmer bildenden Mitnehmerelemente an einem Kettenglied. Dadurch wird ein selbständiges Herausfallen der Mitnehmerelemente aus dem Kettenverbund verhindert. Ferner stellt das Verbindungselement sicher, dass die sphärisch geformten Mitnehmerhörner spielfrei am Kettenglied anliegen und auch dort während der Montage verharren. Vorteilhaft verbindet das Verbindungselement die beiden Mitnehmerelemente kraftschlüssig und/oder formschlüssig miteinander.

In einer vorteilhaften Ausgestaltung ist das Verbindungselement ein Federelement und/oder ein Stift. Ein als Federelement und/oder Stift ausgebildetes Verbindungselement ist einfach und kostengünstig herstellbar. Das Federelement kann eine Blattfeder sein. Ein als Blattfeder ausgebildetes Verbindungselement weist bevorzugt einen Basisabschnitt und zwei von dem Basisabschnitt abragende Schenkelabschnitte auf, die formschlüssig und/oder kraftschlüssig mit den Mitnehmerelementen verbunden sind. Vorteilhaft weist jeder Schenkelabschnitte eine Rasteinrichtung auf, die mit den Mitnehmerelementen verrastet. Vorteilhaft ist die Rasteinrichtung eine Wölbung, die an den freien Enden der Schenkelabschnitte ausgebildet ist. Ein als Stift ausgebildetes Verbindungselement wird bevorzugt in eine von den beiden Mitnehmerelementen gebildete Öffnung eingesetzt.

Über die Verbindungsabschnitte werden die beiden Mitnehmerelemente miteinander verbunden. Vorteilhaft werden die Mitnehmerelemente über die Verbindungsabschnitte und das Verbindungselement lösbar miteinander verbunden. Vorteilhaft sind die Verbindungsabschnitte spiegelsymmetrisch zueinander ausgebildet, wodurch bei der Montage und Demontage eines Förderorgans an dem Mitnehmer eine beidseitig wirkende Drehmomentabstützung erzielt wird.

In einer vorteilhaften Ausgestaltung weist jeder Verbindungsabschnitt wenigstens eine Abstützfläche auf, wobei im verbundenen Zustand der Mitnehmerelemente die Abstützflächen einander gegenüberliegen und/oder aneinander anliegen. Dadurch wird eine ausreichende Abstützung der Drehmomente während der Montage und der Demontage eines Förderorgans an dem Mitnehmer erzielt. Die wenigstens eine Abstützfläche kann vertikal oder horizontal zu einer Längsachse des Kettenglieds angeordnet sein. Ferner kann jeder Verbindungsabschnitt mehrere Abstützflächen aufweisen, wobei im verbundenen Zustand der Mitnehmerelemente die Abstützflächen einander gegenüberliegen und/oder aneinander anliegen. So kann beispielsweise jeder Verbindungsabschnitt eine horizontal zu einer Längsachse des Kettenglieds ausgerichtete Abstützfläche und eine vertikal zu der Längsachse des Kettenglieds orientierte Abstützfläche aufweisen, wobei die horizontal orientierten Abstützflächen und die vertikal orientierten Abstützflächen einander gegenüberliegen und/oder aneinander anliegen.

In einer vorteilhaften Ausgestaltung greifen die Verbindungsabschnitte im verbundenen Zustand der Mitnehmerelemente formschlüssig ineinander. Dadurch wird eine ausreichende Abstützung der Drehmomente während der Montage und Demontage der Mitnehmerelemente an dem Kettenglied und eines Förderorgans an dem Mitnehmer erzielt.

Wenn das Verbindungselement ein Federelement ist, bilden die beiden komplementär geformten Verbindungsabschnitte im verbundenen Zustand der Mitnehmerelemente wenigstens eine Aufnahmeöffnung zum Einsetzen des Federelements, wobei das Federelement beim Einsetzen in die Aufnahmeöffnung mit den Verbindungsabschnitten verrastet. Vorteilhaft bilden die Verbindungsabschnitte eine Aufnahmeform zum Verrasten der Rasteinrichtung des Federelementes. Die Aufnahmeform kann als ein Rücksprung ausgebildet sein. Wenn das Verbindungselement ein Stift ist, weist jeder Verbindungsabschnitt bevorzugt einen Aufnahmeöffnungsabschnitt auf, so dass im verbundenen Zustand der Mitnehmerelemente die zueinander komplementär geformten Verbindungsabschnitte eine Aufnahmeöffnung zum Einsetzen, insbesondere Einpressen, des Stifts bilden.

In einer vorteilhaften Ausgestaltung weist jeder Verbindungsabschnitt wenigstens einen sich parallel zu einem geraden Abschnitt des Kettenglieds erstreckenden Schenkel auf, wobei die im verbundenen Zustand die Aufnahmeöffnung und/oder der Aufnahmeöffnungsabschnitt zum Einsetzen des Verbindungselements bilden. Vorteilhaft weist jeder der Schenkel wenigstens einen Ausschnitt auf, wobei die beiden Ausschnitte im zusammengesetzten Zustand der Verbindungsabschnitte die Aufnahmeöffnung bilden. Weiterhin vorteilhaft weist jeder Schenkel wenigstens zwei Ausschnitte auf, die durch einen Stegabschnitt voneinander getrennt sind, so dass im zusammengesetzten Zustand der Mitnehmerelemente zwei Öffnungen gebildet werden, die zusammen die Aufnahmeöffnung bilden, in die ein als Blattfeder ausgebildetes Federelement einsetzbar ist. Insbesondere wird jeweils ein Schenkelabschnitt der Blattfeder in eine der Öffnungen eingesetzt. Vorteilhaft kann jeder Verbindungsabschnitt zwei sich parallel zu einem geraden Abschnitt des Kettenglieds erstreckende Schenkel aufweisen, die spiegelsymmetrisch zueinander angeordnet sind. Vorteilhaft bilden zwei zueinander komplementär geformte Schenkel die Aufnahmeöffnung zum Einsetzen des Verbindungselements, und die anderen zueinander komplementär geformten Schenkel bilden eine Aufnahmeform zum Verrasten des Verbindungselements.

In einer vorteilhaften Ausgestaltung weist einer der Verbindungsabschnitte einen Vorsprung auf, und der andere Verbindungsabschnitt weist eine zu dem Vorsprung korrespondierende Ausnehmung auf, wobei der Vorsprung im verbundenen Zustand der Mitnehmerelemente in die Ausnehmung eingreift. Insbesondere greift der Vorsprung formschlüssig und/oder kraftschlüssig in die Ausnehmung ein. Bevorzugt weist einer der Verbindungsabschnitte zwei Gabelabschnitte auf, die die Ausnehmung bilden. Weiterhin vorteilhaft weist der Vorsprung und die beiden Gabelabschnitte jeweils einen Aufnahmeöffnungsabschnitt auf.

In einer vorteilhaften Ausgestaltung sind die Verbindungsabschnitte im Querschnitt L-förmig ausgebildet, wobei die Verbindungsabschnitte derart formschlüssig ineinander greifen, dass die Verbindungsabschnitte im verbundenen Zustand im Querschnitt eine Rechteckform bilden.

In einer vorteilhaften Ausgestaltung weist das Mitnehmerhorn an einer der Anlagefläche abgewandten Seite eine dachförmige Kontur auf. Die dachförmige Kontur ermöglicht einen ruhigen, vertikalen Lauf des Mitnehmers über ein Kettenrad. Die dachförmige Kontur kann im Querschnitt trapez- oder dreiecksförmig ausgebildet sein und verhindert ein Anlaufen des Mitnehmers an das Kettenrad.

In einer vorteilhaften Ausgestaltung weist der Befestigungsabschnitt eine Befestigungseinrichtung zum Befestigen des Befestigungsabschnittes an dem Förderorgan auf. Die Befestigungseinrichtung ist derart ausgebildet, dass diese auch bei in das Förderorgan eingebrachten Bohrungen, die nicht normiert sind, einsetzbar ist. Die Befestigungseinrichtung kann als ein in dem Befestigungsabschnitt integriertes Befestigungselement, wie beispielsweise eine Schraube oder eine Mutter, ausgebildet sein. Ferner kann die Befestigungseinrichtung auch derart ausgebildet sein, dass ein separates Befestigungselement einsetzbar ist.

In einer vorteilhaften Ausgestaltung weist die Befestigungseinrichtung eine Aussparung auf, in die ein Befestigungselement verdrehsicher einsetzbar ist. Dadurch ist eine einfache Befestigung des Mitnehmerelements an einem Förderorgan möglich. Insbesondere ist das Befestigungselement formschlüssig in die Aussparung einsetzbar. Somit ist eine Montage des Mitnehmerelements an einem Förderorgan mit einem normierten Anziehdrehmoment möglich. Darüber hinaus kann die Aussparung derart ausgebildet sein, dass auf Normteile als Befestigungselemente zurückgegriffen werden kann. Somit entfällt die Herstellung eines normteilgerechten Zustandes. So kann in die Aussparung beispielsweise eine genormte Mutter oder ein Schraubenkopf einer genormten Schraube verdrehsicher eingesetzt werden.

In die Aussparung kann eine Bohrung zum Hindurchführen eines Befestigungselements münden. Über die Bohrung kann sich ein Gewindeabschnitt eines Befestigungselementes hindurch erstrecken.

In einer vorteilhaften Ausgestaltung ist die Aussparung als ein Innensechskant ausgebildet. Somit kann eine normierte Sechskantschraube in die Aussparung eingesetzt werden, indem der Gewindeabschnitt in die Bohrung eingeführt wird, bis der Schraubenkopf formschlüssig in der Aussparung einliegt und sich der Gewindeabschnitt durch die Bohrung hindurch erstreckt. Ferner kann eine normierte Sechskantmutter in die Aussparung eingesetzt werden.

Der Befestigungsabschnitt kann trapezförmig ausgebildet sein. Durch die Trapezform wird eine Kontur geschaffen, die einen geringen Bauraum in Anspruch nimmt und somit ein niedriges Gewicht aufweist und kostengünstig in der Herstellung ist.

Erfindungsgemäß * weist der Befestigungsabschnitt eine Vertiefung zur formschlüssigen Anlage eines geraden Abschnitts des Kettenglieds auf. Dadurch wird eine sichere Anlage des Kettenglieds an dem Mitnehmerelement gewährleistet. Zudem reduziert die Vertiefung eine Relativbewegung zwischen dem Mitnehmerelement und dem Kettenglied und damit den Verschleiß. Insbesondere ist die Aussparung konkav ausgebildet. Ferner kann ein Krümmungsradius der Vertiefung einem Radius des geraden Abschnitts entsprechen.

In einer vorteilhaften Ausgestaltung weist das Mitnehmerhorn einen Stegabschnitt und einen Krümmungsabschnitt auf, wobei der Stegabschnitt von dem Befestigungsabschnitt in einem Winkel abragt und wobei der Krümmungsabschnitt bogenförmig ausgebildet ist und den gekrümmten Abschnitt des Kettenglieds umgreift. Der Stegabschnitt und der Krümmungsabschnitt weisen die gekrümmte Anlagefläche und die in die Anlagefläche eingebrachte konkave Vertiefung auf. Ferner sind der Stegabschnitt und der Krümmungsabschnitt an einer der Anlageflächen abgewandten Seite mit der dachförmigen Kontur versehen. Der Stegabschnitt und der Krümmungsabschnitt sind bevorzugt einteilig ausgebildet.

In einer vorteilhaften Ausgestaltung sind die Mitnehmerelemente einteilig ausgebildet. Durch die einteilige Ausbildung weisen die Mitnehmerelemente eine hohe Festigkeit auf. Ferner können die Mitnehmerelemente auch zweiteilig ausgebildet sein, indem beispielsweise das Mitnehmerhorn und der Befestigungsabschnitt stoffschlüssig, insbesondere mittels Schweißen, miteinander verbunden sind.

Die Mitnehmerelemente können aus Metall oder Kunststoff hergestellt sein. So können die Mitnehmerelemente aus Vergütungsstahl oder aus Stahlfeinguss hergestellt sein. Aus Kunststoff hergestellte Mitnehmerelemente sind insbesondere aus einem faserverstärkten Kunststoff hergestellt. Aus Metall hergestellte Mitnehmerelemente weisen eine hohe Festigkeit auf. Aus Kunststoff, insbesondere faserverstärktem Kunststoff, hergestellte Mitnehmerelemente weisen ein geringes Gewicht auf.

Im Folgenden werden der Mitnehmer sowie weitere Merkmale und Vorteile anhand von Ausführungsbeispielen näher erläutert, die in den Figuren schematisch dargestellt sind. Hierbei zeigen:
- Fig. 1: eine perspektivische Ansicht eines Mitnehmers, der aus zwei lösbar miteinander verbundenen Mitnehmerelementen gemäß einer ersten Ausführungsform gebildet ist und der ein Förderorgan an einem Kettenglied einer Kette befestigt;
- Fig. 2: eine vergrößerte perspektivische Ansicht eines Mitnehmerelements, das in Fig. 1 dargestellt ist;
- Fig. 3: eine zweite perspektivische Ansicht des in Fig. 2 gezeigten Mitnehmerelements;
- Fig. 4: eine dritte perspektivische Ansicht des in Fig. 2 gezeigten Mitnehmerelements;
- Fig. 5: eine vierte perspektivische Ansicht des in Fig. 2 gezeigten Mitnehmerelements;
- Fig. 6: einen Längsschnitt entlang der Linie VI-VI in Fig. 1;
- Fig. 7: einen vergrößerten Schnitt entlang der Linie VII-VII in Fig. 6;
- Fig. 8: einen vergrößerten Teilausschnitt des Bereichs VIII in Fig. 6;
- Fig. 9: eine perspektivische Ansicht eines Mitnehmers, der aus zwei lösbar miteinander verbundenen Mitnehmerelementen gemäß einer zweiten Ausführungsform gebildet ist und der ein Förderorgan an einem Kettenglied einer Kette befestigt;
- Fig. 10: einen Längsschnitt entlang der Linie X-X in Fig. 9;
- Fig. 11: eine vergrößerte Draufsicht eines Teilausschnitts des Bereichs XI in Fig. 10;
- Fig. 12: einen vergrößerten Teilausschnitt des Bereichs XI;
- Fig. 13: eine perspektivische Ansicht eines Mitnehmers, der aus zwei lösbar miteinander verbundenen Mitnehmerelementen gemäß einer dritten Ausführungsform gebildet ist und der ein Förderorgan an einem Kettenglied einer Kette befestigt;
- Fig. 14: einen Längsschnitt entlang der Linie XIV-XIV in Fig. 13;
- Fig. 15: einen vergrößerten Schnitt entlang der Linie XV-XV in Fig. 13;
- Fig. 16: einen vergrößerten Teilausschnitt des Bereichs XVI in Fig. 14;
- Fig. 17: eine perspektivische Ansicht eines Mitnehmers, der aus zwei lösbar miteinander verbundenen Mitnehmerelementen gemäß einer vierten Ausführungsform gebildet ist und der ein Förderorgan an einem Kettenglied einer Kette befestigt;
- Fig. 18: einen Längsschnitt entlang der Linie XVIII-XVIII in Fig. 17;
- Fig. 19: einen vergrößerten Schnitt entlang der Linie XIX-XIX in Fig. 17;
- Fig. 20: einen vergrößerten Teilausschnitt des Bereichs XX in Fig. 18;
- Fig. 21: eine perspektivische Ansicht eines Mitnehmers, der aus zwei lösbar miteinander verbundenen Mitnehmerelementen gemäß einer fünften Ausführungsform gebildet ist und der ein Förderorgan an einem Kettenglied einer Kette befestigt;
- Fig. 22: einen Längsschnitt entlang der Linie XXII-XXII in Fig. 21;
- Fig. 23: einen vergrößerten Schnitt entlang der Linie XXIII-XXIII in Fig. 21; und
- Fig. 24: einen vergrößerten Teilausschnitt des Bereichs XXIV in Fig. 22.

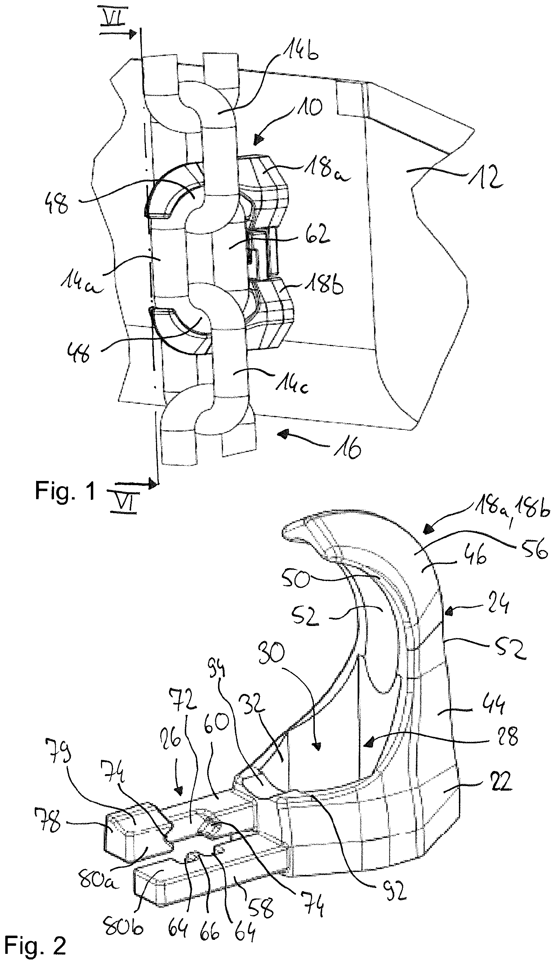

In Fig. 1 ist ein Mitnehmer 10 gezeigt, der zur Befestigung eines Förderorgans 12 an einem einzelnen Kettenglied 14a einer Kette 16 dient.

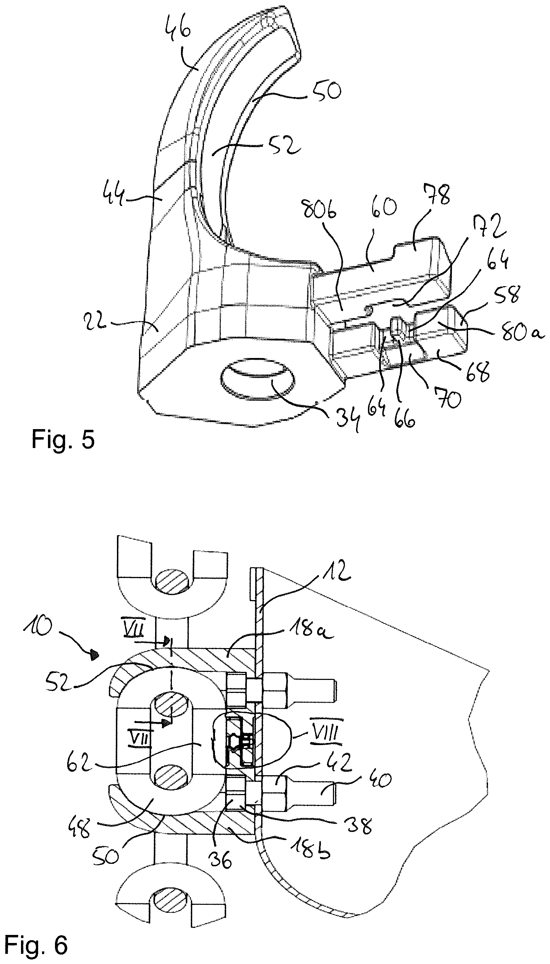

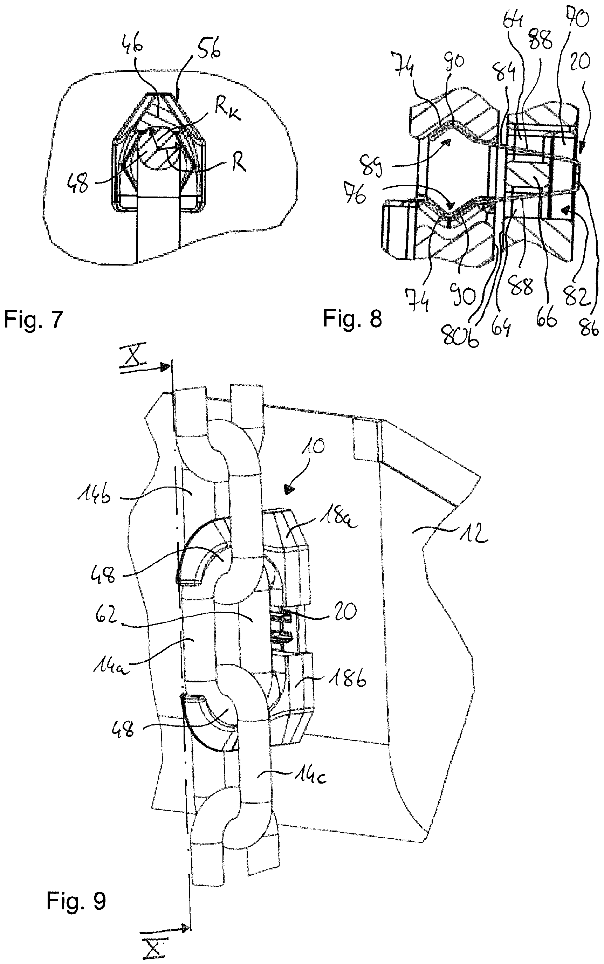

Der Mitnehmer 10 umfasst zwei Mitnehmerelemente 18a, 18b, die das Kettenglied 14a umgreifen und an dem Förderorgan 12 befestigt sind. Wie insbesondere in Fig. 6 und Fig. 8 ersichtlich ist, sind die beiden Mitnehmerelemente 18a, 18b über ein Verbindungselement 20 lösbar miteinander verbunden.

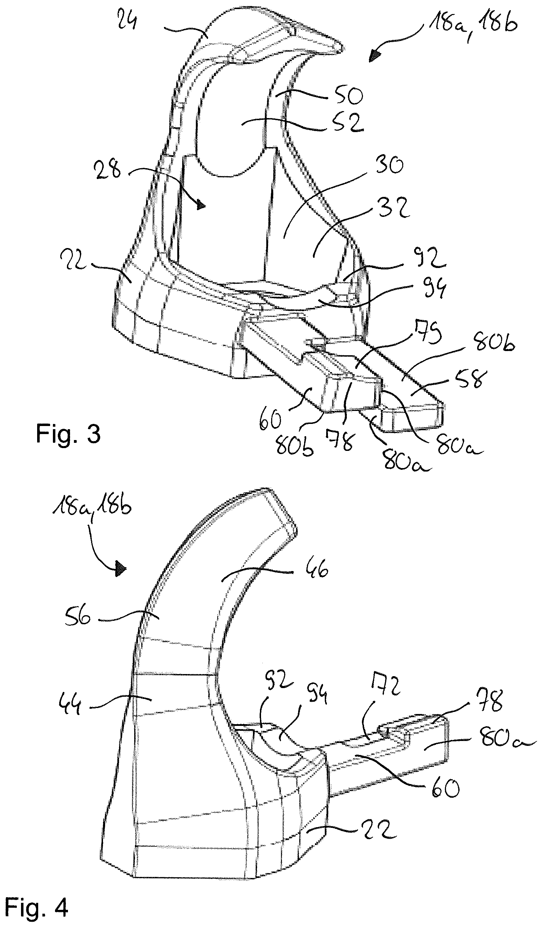

Gemäß den Figuren 2 bis 5 umfasst jedes Mitnehmerelement 18a, 18b einen Befestigungsabschnitt 22, der an dem Förderorgan 12 befestigbar ist, ein Mitnehmerhorn 24, das von dem Befestigungsabschnitt 22 abragt und in einen lichten Innenraum eines Kettenglieds 14b, 14c einführbar ist, und einen Verbindungsabschnitt 26, der von dem Befestigungsabschnitt 22 abragt und über den die beiden Mitnehmerelemente 18a, 18b miteinander verbunden sind, auf. Die Mitnehmerelemente 18a, 18b sind einteilig ausgebildet und aus Metall, insbesondere Vergütungsstahl oder Stahlfeinguss hergestellt. Darüber hinaus kann das Mitnehmerelement 18a, 18b auch mehrteilig ausgebildet sein, indem beispielsweise das Mitnehmerhorn 24 und/oder der Verbindungsabschnitt 26 stoffschlüssig mit dem Befestigungsabschnitt 22 verbunden ist. Ferner kann das Mitnehmerelement 18a, 18b aus einem Kunststoff, insbesondere einem faserverstärkten Kunststoff, hergestellt sein.

Der Befestigungsabschnitt 22 ist trapezförmig ausgebildet und weist eine Befestigungseinrichtung 28 zum Befestigen des Befestigungsabschnitts 22 an dem Förderorgan 12 auf. Die Befestigungseinrichtung 28 umfasst eine Aussparung 30, die als ein Innensechskant 32 ausgebildet ist, und eine in die Aussparung 30 mündende Bohrung 34.

Wie in Fig. 6 ersichtlich ist, ist in die Aussparung 30 ein Kopf 36 einer Sechskantschraube 38 derart verdrehsicher einsetzbar, dass sich ein Gewindeabschnitt 40 der Sechskantschraube 38 durch die Bohrung 34 hindurch erstreckt. Anstelle einer Sechskantschraube 38 kann auch eine Sechskantmutter formschlüssig in die Aussparung 30 eingesetzt werden. Durch die als Innensechskant 32 ausgebildete Aussparung 30 kann auf Normteile als Befestigungselemente zurückgegriffen werden. Zudem lassen sich die Mitnehmerelemente 18a, 18b auch bei nicht normierten beziehungsweise standardisierten Bohrungen des Förderorgans 12 verwenden. Zur Befestigung der Mitnehmerelemente 18a, 18b an dem Förderorgan 12 ist auf die Gewindeabschnitte 40 jeweils eine Sechskantmutter 42 aufgeschraubt.

Der Befestigungsabschnitt 22 weist ferner einen die Aussparung 30 umgebenden Rand 92 auf, in dem eine konkave Ausnehmung 94 zur formschlüssigen Anlage eines geraden Abschnitts 62 des Kettenglieds 14a eingebracht ist.

Das Mitnehmerhorn 24 weist einen von dem Befestigungsabschnitt 22 senkrecht abragenden Stegabschnitt 44 und einen Krümmungsabschnitt 46 auf, der sich an den Stegabschnitt 44 anschließt. Der Krümmungsabschnitt 46 ist bogenförmig ausgebildet, so dass der Krümmungsabschnitt 46 einen gekrümmten Abschnitt 48 des Kettenglieds 14a umgreifen kann, wie dies in den Figuren 1 und 6 ersichtlich ist.

Das Mitnehmerhorn 24, insbesondere der Krümmungsabschnitt 46, weist eine dem gekrümmten Abschnitt 48 zugewandte gekrümmte Anlagefläche 50 auf, an der der gekrümmten Abschnitt 48 des Kettenglieds 14a anliegt. In die gekrümmte Anlagefläche 50 ist eine konkave Vertiefung 52 zur formschlüssigen und spielfreien Anlage des gekrümmten Abschnitts 48 des Kettenglieds 14a eingebracht.

Wie in Fig. 7 ersichtlich ist, entspricht ein Krümmungsradius R_{K} der konkaven Vertiefung 52 einem Radius R des gekrümmten Abschnitts 48 des Kettenglieds 14a. Der Radius R entspricht der Hälfte des Durchmessers des Kettenglieds 14a. Durch die konkave Vertiefung 52 in der gekrümmten Anlagefläche 50 wird eine sehr enge und dadurch spielfreie Ankopplung der Mitnehmerelemente 18a, 18b an dem Kettenglied 14a ermöglicht. Dadurch ist der Verschleiß zwischen den Mitnehmerelementen 18a, 18b und dem Kettenglied 14a während einer Bewegung der Kette 16 reduziert.

Das Mitnehmerhorn 24 weist zudem an der der Anlagefläche 50 abgewandten Seite 54 eine dachförmige Kontur 56 auf. Die dachförmige Kontur 56, die im Querschnitt näherungsweise trapezförmig oder dreiecksförmig ausgebildet sein kann, ermöglicht einen ruhigen Lauf des Förderorgans 12 über nicht dargestellte verzahnte Kettenräder.

Wie in den Figuren 2 bis 5 ersichtlich ist, weist der Verbindungsabschnitt 26 einen ersten Schenkel 58 und einen zweiten Schenkel 60 auf, die von dem Befestigungsabschnitt 22 abragen und sich parallel zu dem geraden Abschnitt 62 des Kettenglieds 14a erstrecken. Die beiden Schenkel 58, 60 sind spiegelsymmetrisch zueinander angeordnet. Insbesondere ist der erste Schenkel 58 zu dem zweiten Schenkel 60 zurückversetzt.

Der erste Schenkel 58 weist zwei Ausschnitte 64 auf, die durch einen Steg 66 voneinander getrennt sind. Wie in Fig. 5 ersichtlich ist, ist auf einer Unterseite 68 des ersten Schenkels 58 im Bereich der beiden Ausschnitte 64 eine Einführschräge 70 ausgebildet. Der zweite Schenkel 60 weist eine Öffnung 72 auf, in deren Seitenwände jeweils ein Rücksprung 74 zur formschlüssigen Aufnahme eines freien Endes 76 des Verbindungselements 20 eingebracht ist. Der zweite Schenkel 60 weist zudem endseitig einen Vorsprung 78 auf, in dem ein Anlageflächenabschnitt 79 in Form eines konkaven Vertiefungsabschnitts zur formschlüssigen Anlage des geraden Abschnitts 62 des Kettenglieds 14a eingebracht ist.

Jeder der Schenkel 58, 60 weist Abstützflächen 80a, 80b auf, die einander gegenüber liegen und/oder aneinander anliegen. Die Abstützflächen 80a, 80b dienen zur Abstützung von Drehmomenten, die auf die Sechskantschrauben 38 bei der Montage der Sechskantmuttern 42 auf den Mitnehmer 10 übertragen werden. Jeder der Schenkel 58, 60 weist zwei Abstützflächen 80a, 80b auf, die senkrecht aufeinander stehen, wobei eine erste Abstützfläche 80a orthogonal oder senkrecht zu dem geraden Abschnitt 62 des Kettenglieds 14a angeordnet ist und eine zweite Abstützfläche 80b vertikal oder parallel zu dem geraden Abschnitt 62 des Kettenglieds 14a angeordnet ist. Im verbundenen Zustand der Mitnehmerelemente 18a, 18b liegen sich die ersten Abstützflächen 80a einander gegenüber und/oder aneinander an und die zweiten Abstützflächen 80b liegen sich ebenfalls einander gegenüber und/oder aneinander an.

Wie zudem in den Figuren 1 und 6 ersichtlich ist, greifen die Verbindungsabschnitte 26 der Mitnehmerelemente 18a, 18b im verbundenen Zustand derart formschlüssig ineinander, dass die Ausschnitte 64 und die Öffnungen 72 eine Aufnahmeöffnung 82 zum Einsetzen des Verbindungselements 20 bilden.

Das Verbindungselement 20 ist als eine Blattfeder 84 ausgebildet und weist einen Basisabschnitt 86 und zwei von dem Basisabschnitt 86 abragende, elastisch verformbare Schenkelabschnitte 88 auf. Die Schenkelabschnitte 88 sind an den freien Enden 76 mit einer Rasteinrichtung 89 versehen, die als eine Wölbung 90 ausgebildet ist.

Beim Einsetzen des Verbindungselements 20 in die Aufnahmeöffnung 82 müssen die beiden elastisch verformbaren Schenkelabschnitte 88 zunächst zusammengedrückt werden. Anschließend werden die Wölbungen 90 und die Schenkelabschnitte 88 über die Einführschrägen 70 in den von den Ausschnitten 64 und Stegen 66 gebildeten Öffnungen eingeführt, bis die Wölbungen 90 in die Rücksprünge 74 einrasten und formschlüssig einliegen. Dadurch sind die beiden Mitnehmerelemente 18a, 18b lösbar miteinander verbunden.

Durch die beiden lösbar miteinander verbundenen Mitnehmerelemente 18a, 18b ist eine Montage der Mitnehmerelemente 18a, 18b an einem Kettenglied 14a außerhalb und/oder innerhalb einer Kettenförderanlage möglich. Zudem wird ein selbständiges Herausfallen der Mitnehmerelemente 18a, 18b aus dem Kettenverbund verhindert. Darüber hinaus wird durch die lösbare Verbindung der beiden Mitnehmerelemente 18a, 18b eine Erleichterung der Montage und Demontage des Förderorgans 12 an dem Mitnehmer 10 ermöglicht.

Wenn die beiden Mitnehmerelemente 18a, 18b über das Verbindungselement 20 miteinander verbunden sind und an dem Kettenglied 14a anliegen, liegt der gerade Abschnitt 62 des Kettenglieds 14a in den Anlageflächenabschnitten 79 der Vorsprünge 68 und der konkaven Ausnehmung 92 ein. Dadurch liegt der Mitnehmer 10 spielfrei an dem Kettenglied 14a an.

Im Folgenden wird ein mögliches Verfahren zur Befestigung des Förderorgans 12 an der Kette 16 mittels des Mitnehmers 10 beschrieben. Zunächst wird jeweils eine Sechskantschraube 38 in die Aussparung 30 eines Mitnehmerelements 18a, 18b derart eingesetzt, dass der Kopf 36 formschlüssig und verdrehsicher in der Aussparung 30 einliegt und sich der Gewindeabschnitt 40 durch die Bohrung 34 hindurch erstreckt. Anschließend wird jeweils ein Mitnehmerhorn 24 in den lichten Innenraum eines sich an das zu umgreifende Kettenglied 14a anschließende Kettenglied 14b, 14c eingeführt, so dass der gekrümmte Abschnitt 48 des zu umgreifenden Kettenglieds 14a formschlüssig in der konkaven Vertiefung 52 der Anlagefläche 50 einliegt und die beiden Verbindungsabschnitte 26 formschlüssig ineinandergreifen. Danach werden die beiden Mitnehmerelemente 18a, 18b durch Einsetzen des Verbindungselements 20 in die von den beiden Schenkeln 58, 60 gebildete Aufnahmeöffnung 82 miteinander verbunden. Hierzu werden die beiden Schenkelabschnitte 88 zusammengedrückt und von unten in die Aufnahmeöffnung 82 eingesetzt, bis die Wölbungen 90 in den Rücksprüngen 74 formschlüssig verrasten. Schließlich werden die Gewindeabschnitte 40 in eine in das Förderorgan 12 eingebrachte Bohrung eingesetzt, so dass sich der Gewindeabschnitt 40 in das Förderorgan 12 hinein erstreckt. Zuletzt werden Sechskantmuttern 42 zur Befestigung des Förderorgans 12 an dem Mitnehmer 10 auf die Gewindeabschnitte 40 aufgeschraubt.

Nachfolgend werden weitere Ausführungsformen der Mitnehmerelemente 18a, 18b beschrieben, wobei für gleiche oder funktionsgleiche Teile dieselben Bezugszeichen verwendet werden.

In den Figuren 9 bis 12 ist eine zweite Ausführungsform der Mitnehmerelemente 18a, 18b gezeigt, die sich von der ersten Ausführungsform in der Ausgestaltung des Verbindungsabschnitts 26 unterscheidet.

Der Verbindungsabschnitt 26 weist lediglich den ersten Schenkel 58 auf, so dass die Aufnahmeöffnung 82 nur von den Ausschnitten 64 und Stegen 66 gebildet wird.

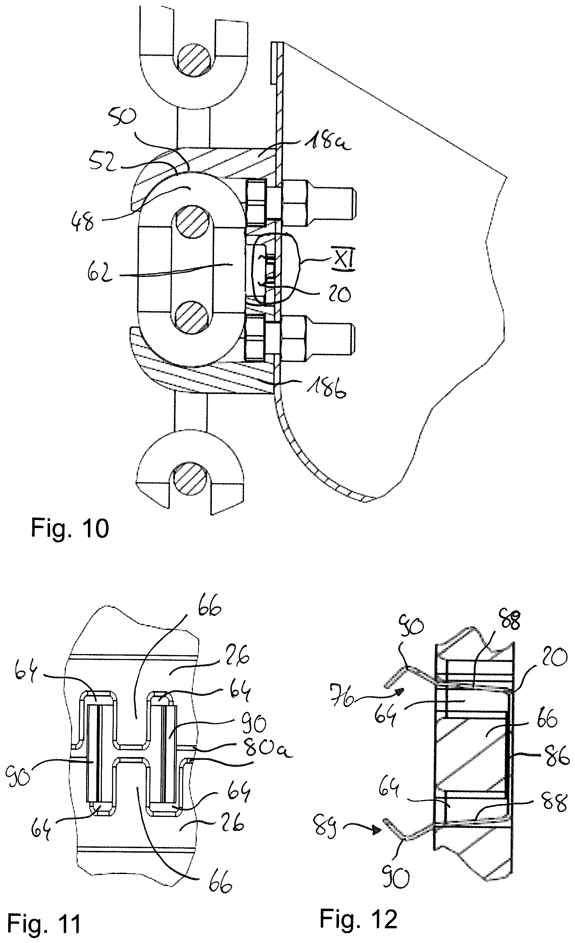

Wie insbesondere in den Figuren 10 und 12 ersichtlich ist, ist die Blattfeder 84 derart in die Aufnahmeöffnung 82 eingesetzt, dass die Wölbungen 90 aus der Aufnahmeöffnung 82 herausragen. Bei dieser Ausführungsform verhindern die Schenkelabschnitte 88 und die beiden Stege 66 ein Auseinanderziehen der beiden Mitnehmerelemente 18a, 18b. Da die Mitnehmerelemente 18a, 18b im vorliegenden Ausführungsbeispiel nur den ersten Schenkel 58 aufweisen, liegen zur Abstützung der Drehmomente nur die ersten Abstützflächen 80a einander gegenüber und/oder aneinander an.

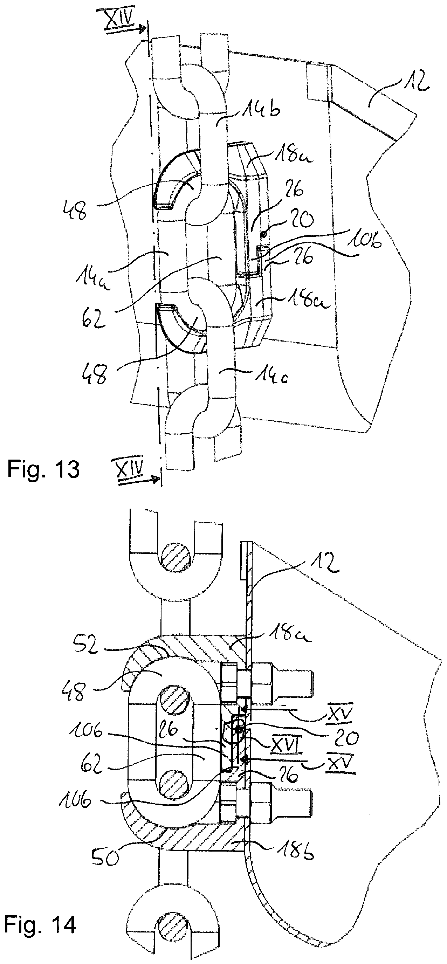

In den Figuren 13 bis 16 ist eine dritte Ausführungsform der Mitnehmerelemente 18a, 18b gezeigt, die sich von den anderen beiden Ausführungsformen in der Ausgestaltung der Verbindungsabschnitte 26 und des Verbindungselements 20 unterscheiden.

Einer der Verbindungsabschnitte 26 weist einen Vorsprung 96 auf, und der andere Verbindungsabschnitt 26 weist eine zu dem Vorsprung 96 korrespondierende Ausnehmung 98 auf, in die der Vorsprung 96 eingreift. Insbesondere greift der Vorsprung 96 formschlüssig und/oder kraftschlüssig in die Ausnehmung 98 ein. Die Ausnehmung 98 wird von zwei Gabelabschnitten 100 gebildet.

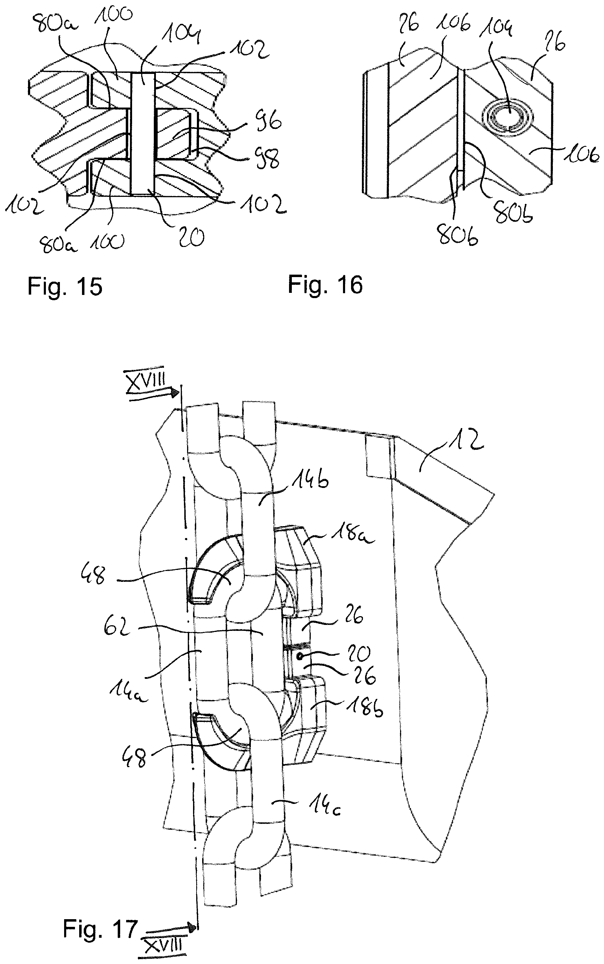

Sowohl der Vorsprung 96 als auch die Gabelabschnitte 100 weisen jeweils einen Aufnahmeöffnungsabschnitt 102 auf. Wie insbesondere in Fig. 15 ersichtlich ist, greifen die beiden Verbindungsabschnitte 26 derart formschlüssig ineinander, dass die Aufnahmeöffnungsabschnitte 102 miteinander fluchten und die Aufnahmeöffnung 82 bilden. In die Aufnahmeöffnung 82 ist das Verbindungselement 20 formschlüssig und/oder kraftschlüssig eingesetzt.

Das Verbindungselement 20 ist vorliegend ein Stift 104, der in die Aufnahmeöffnung 82 eingesetzt, insbesondere eingepresst wird.

Zum Abfangen der Drehmomente, die auf die Sechskantschraube 38 bei der Montage der Sechskantmuttern 42 auf den Mitnehmer 10 übertragen werden, weisen der Vorsprung 96 und die Ausnehmung 98 die ersten Abstützflächen 80a auf, die aneinander anliegen. Die zweiten Abstützflächen 80b sind an ineinandergreifenden Fortsätzen 106 der Verbindungsabschnitte 26 ausgebildet, die einander gegenüberliegen und/oder aneinander anliegen.

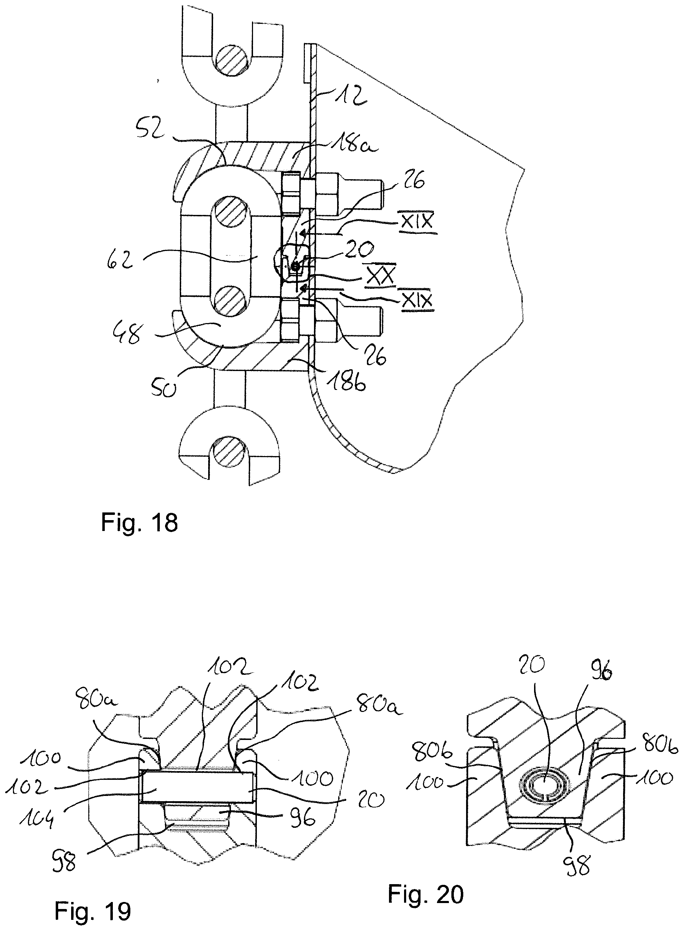

In den Figuren 17 bis 20 ist eine vierte Ausführungsform der Mitnehmerelemente 18a, 18b dargestellt, die sich von der dritten Ausführungsformen in der Ausgestaltung des Vorsprungs 96 und der Ausnehmung 98 unterscheidet.

Der Vorsprung 96 und der Rücksprung 98 weisen eine konische Form auf, die formschlüssig ineinander greifen.

Zum Abfangen der Drehmomente, die auf die Sechskantschraube 38 bei der Montage der Sechskantmuttern 42 auf den Mitnehmer 10 übertragen werden, weisen der Vorsprung 96 und die Ausnehmung 98 die ersten und zweiten Abstützflächen 80a, 80b auf, die aneinander anliegen.

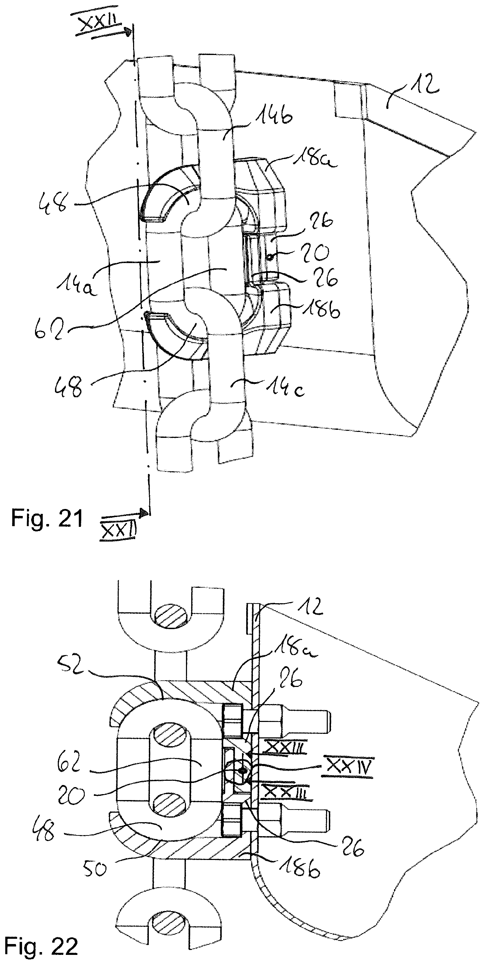

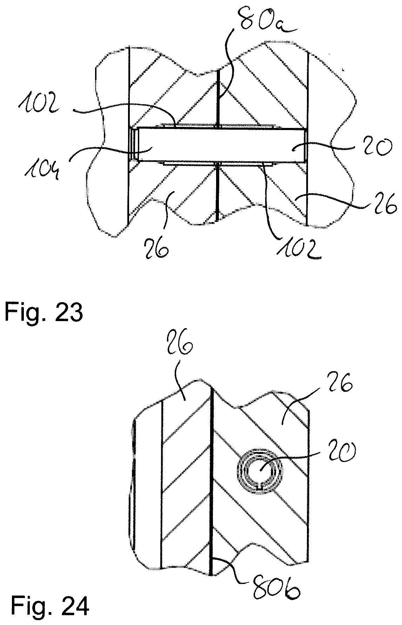

In den Figuren 21 bis 24 ist eine fünfte Ausführungsform der Mitnehmerelemente 18a, 18b dargestellt, die sich von den anderen Ausführungsformen in der Ausgestaltung der Verbindungsabschnitte 26 unterscheidet. Die Verbindungsabschnitte 26 sind im Querschnitt L-förmig ausgebildet und greifen derart formschlüssig ineinander, dass die Verbindungsabschnitte 26 im verbundenen Zustand im Querschnitt eine Rechteckform bilden.

Zum Abfangen der Drehmomente, die auf die Sechskantschraube 38 bei der Montage der Sechskantmuttern 42 auf den Mitnehmer 10 übertragen werden, weisen die im Querschnitt L-förmigen Verbindungsabschnitte 26 die ersten und zweiten Abstützflächen 80a, 80b auf, die aneinander anliegen.

### Bezugszeichenliste

- 10: Mitnehmer
- 12: Förderorgan
- 14a: Kettenglied
- 14b: Kettenglied
- 14c: Kettenglied
- 16: Kette
- 18a: Mitnehmerelement
- 18b: Mitnehmerelement
- 20: Verbindungselement
- 22: Befestigungsabschnitt
- 24: Mitnehmerhorn
- 26: Verbindungsabschnitt
- 28: Befestigungseinrichtung
- 30: Aussparung
- 32: Innensechskant
- 34: Bohrung
- 36: Kopf
- 38: Sechskantschraube
- 40: Gewindeabschnitt
- 42: Sechskantmutter
- 44: Stegabschnitt
- 46: Krümmungsabschnitt
- 48: gekrümmter Abschnitt
- 50: gekrümmte Anlagefläche
- 52: konkave Vertiefung
- 54: abgewandte Seite
- 56: dachförmige Kontur
- 58: erster Schenkel
- 60: zweiter Schenkel
- 62: gerader Abschnitt
- 64: Ausschnitt
- 66: Steg
- 68: Unterseite
- 70: Einführschräge
- 72: Öffnung
- 74: Rücksprung
- 76: freies Ende
- 78: Vorsprung
- 79: Anlageflächenabschnitt
- 80a: erste Abstützfläche
- 80b: zweite Abstützfläche
- 82: Aufnahmeöffnung
- 84: Blattfeder
- 86: Basisabschnitt
- 88: Schenkelabschnitt
- 89: Rasteinrichtung
- 90: Wölbung
- 92: Rand
- 94: konkave Ausnehmung
- 96: Vorsprung
- 98: Ausnehmung
- 100: Gabelabschnitt
- 102: Aufnahmeöffnungsabschnitt
- 104: Stift
- 106: Fortsatz

- R_{K}: Krümmungsradius
- R: Radius des Kettenglieds

## Patentansprüche

1. Mitnehmer (10) zur Befestigung eines Förderorgans (12) an einer aus Kettengliedern (14a, 14b, 14c) gebildeten Kette (16) eines Kettenförderers, aufweisend zwei Mitnehmerelemente (18a, 18b), die über ein Verbindungselement (20) lösbar miteinander verbunden sind, wobei jedes der Mitnehmerelemente (18a, 18b) einen Befestigungsabschnitt (22), der an dem Förderorgan (12) befestigbar ist, und ein Mitnehmerhorn (24) aufweist, das an ein Kettenglied (14a) anlegbar ist, wobei das Mitnehmerhorn (24) eine gekrümmte Anlagefläche (50) aufweist, die zur Anlage an einen gekrümmten Abschnitt (48) des Kettenglieds (14a) ausgebildet ist, wobei jedes Mitnehmerelement (18a, 18b) einen Verbindungsabschnitt (26) aufweist, die komplementär zueinander geformt sind, wobei im verbundenen Zustand der Mitnehmerelemente (18a, 18b) die zueinander komplementär geformten Verbindungsabschnitte (26) wenigstens eine Aufnahmeöffnung (82) und/oder einen Aufnahmeöffnungsabschnitt (102) zum Einsetzen des Verbindungselementes (20) bilden,
**dadurch gekennzeichnet, dass**
in die Anlagefläche (50) eine konkave Vertiefung (52) eingebracht ist, die derart ausgebildet ist, dass der gekrümmte Abschnitt (48) formschlüssig und spielfrei in der Vertiefung (52) einliegt, und dadurch, dass
der Befestigungsabschnitt (22) eine Vertiefung (94) zur formschlüssigen Anlage eines geraden Abschnitts des Kettenglieds (14a) aufweist.

2. Mitnehmer nach Anspruch 1, **dadurch gekennzeichnet, dass** ein Krümmungsradius (R_{K}) der konkaven Vertiefung (52) einem Radius (R) des gekrümmten Abschnitts (48) des Kettenglieds (14a) entspricht.

3. Mitnehmer nach Anspruch 1 oder 2, **dadurch gekennzeichnet, dass** das Verbindungselement (20) ein Federelement und/oder ein Stift (104) ist.

4. Mitnehmer nach einem der vorhergehenden Ansprüche, **dadurch gekennzeichnet, dass** jeder Verbindungsabschnitt (26) wenigstens eine Abstützfläche (80a, 80b) aufweist, wobei im verbundenen Zustand der Mitnehmerelemente (18a, 18b) die Abstützflächen (80a, 80b) einander gegenüber liegen und/oder aneinander anliegen.

5. Mitnehmer nach einem der vorhergehenden Ansprüche, **dadurch gekennzeichnet, dass** die Verbindungsabschnitte (26) im verbundenen Zustand der Mitnehmerelemente (18a, 18b) formschlüssig ineinander greifen.

6. Mitnehmer nach einem der vorhergehenden Ansprüche, **dadurch gekennzeichnet, dass** jeder Verbindungsabschnitt (26) wenigstens einen sich parallel zu einem geraden Abschnitt (62) des Kettenglieds (14a) erstreckenden Schenkel (58, 60) aufweist, die im verbundenen Zustand die Aufnahmeöffnung (82) und/oder der Aufnahmeöffnungsabschnitt (102) zum Einsetzen des Verbindungselementes (20) bilden.

7. Mitnehmer nach einem der vorhergehenden Ansprüche, **dadurch gekennzeichnet, dass** einer der Verbindungsabschnitte (26) einen Vorsprung (96) aufweist und dass der andere Verbindungsabschnitt (26) eine zu dem Vorsprung (96) korrespondierende Ausnehmung (98) aufweist, wobei der Vorsprung (96) im verbundenen Zustand der Mitnehmerelemente (18a, 18b) in die Ausnehmung (98) eingreift.

8. Mitnehmer nach einem der vorhergehenden Ansprüche, **dadurch gekennzeichnet, dass** das Mitnehmerhorn (24) an einer der Anlagefläche (50) abgewandten Seite (54) eine dachförmige Kontur (56) aufweist.

9. Mitnehmer nach einem der vorhergehenden Ansprüche, **dadurch gekennzeichnet, dass** der Befestigungsabschnitt (22) eine Befestigungseinrichtung (28) zum Befestigen des Befestigungsabschnittes (22) an dem Förderorgan (12) aufweist.

10. Mitnehmer nach Anspruch 9, **dadurch gekennzeichnet, dass** die Befestigungseinrichtung (28) eine Aussparung (30) aufweist, in die ein Befestigungselement verdrehsicher einsetzbar ist.

11. Mitnehmer nach Anspruch 10, **dadurch gekennzeichnet, dass** in die Aussparung (30) eine Bohrung (34) zum Hindurchführen eines Befestigungselementes führt.

12. Mitnehmer nach Anspruch 10 oder 11 , **dadurch gekennzeichnet, dass** die Aussparung (20) als ein Innensechskant (32) ausgebildet ist.

13. Mitnehmer nach einem der vorhergehenden Ansprüche, **dadurch gekennzeichnet, dass** die Mitnehmerelemente (18a, 18b) einteilig ausgebildet sind.

14. Mitnehmer nach einem der vorhergehenden Ansprüche, **dadurch gekennzeichnet, dass** die Mitnehmerelemente (18a, 18b) aus Metall oder Kunststoff hergestellt sind.

## Claims

1. Attachment (10) for fastening a conveyor element (12) to a chain (16) of a chain conveyor formed of chain links (14a, 14b, 14c), comprising two attachment elements (18a, 18b) which are detachably connected to one another via a connecting element (20), wherein each of the attachment elements (18a, 18b) has a fastening section (22) which can be fastened to the conveyor member (12), and an attachment horn (24) which is attachable to a chain link (14a), the attachment horn (24) has a curved contact surface (50) which is configured to abut to a curved section (48) of the chain link (14a), wherein each attachment element (18a, 18b) has a connecting section (26) shaped complementary to each other, wherein in the connected state of the attachment elements (18a, 18b) the connecting sections (26) shaped complementary to each other form at least one receiving opening (82) and/or a receiving opening section (102) for inserting the connecting element (20), **characterised in that** a concave recess (52) is introduced into the contact surface (50), which is configured in such a way that the curved section (48) lies in the recess (52) in a positive locking manner and free of play, and, **in that** the fastening section (22) has a recess (94) for the positive locking contact of a straight section of the chain link (14a).

2. Attachment according to claim 1, **characterised in that** a radius of curvature (R_{K}) of the concave recess (52) corresponds to a radius (R) of the curved section (48) of the chain link (14a).

3. Attachment according to claim 1 or 2, **characterised in that** the connecting element (20) is a spring element and/or a pin (104).

4. Attachment according to one of the preceding claims, **characterised in that** each connecting section (26) has at least one supporting surface (80a, 80b), wherein in the connected state of the attachment elements (18a, 18b) the supporting surfaces (80a, 80b) are opposite to each other and/or abut each other.

5. Attachment according to one of the preceding claims, **characterised in that** in the connected sate of the attachment elements (18a, 18b) the connecting sections (26) engage in a positive locking manner.

6. Attachment according to one of the preceding claims, **characterised in that** each connecting section (26) has at least one leg (58, 60) extending parallel to a straight section (62) of the chain link (14a), which in the connected state form the receiving opening (82) and/or the receiving opening section (102) for inserting the connecting element (20).

7. Attachment according to one of the preceding claims, **characterised in that** one of the connecting sections (26) has a protrusion (96) and that the other connecting section (26) has a clearance (98) corresponding to the protrusion (96), wherein in the connected state of the attachment elements (18a, 18b) the protrusion (96) engages with the clearance (98).

8. Attachment according to one of the preceding claims, **characterised in that** the attachment horn (24) has a roof-shaped contour (56) on a side (54) facing away from the contact surface (50).

9. Attachment according to one of the preceding claims, **characterised in that** the fastening section (22) has a fastening device (28) for fastening the fastening section (22) to the conveyor element (12).

10. Attachment according to claim 9, **characterised in that** the fastening device (28) has a recess (30) into which a fastening element can be inserted in a torsion-proof manner.

11. Attachment according to claim 10, **characterised in that** a bore (34) leads into the recess (30) for passing a fastening element.

12. Attachment according to claim 10 or 11, **characterised in that** the recess (30) is formed as a hexagon socket (32).

13. Attachment according to one of the preceding claims, **characterised in that** the attachment elements (18a, 18b) are formed in one piece.

14. Attachment according to one of the preceding claims, **characterised in that** the attachment elements (18a, 18b) are made of metal or plastic.

## Revendications

1. Entraîneur (10) pour la fixation d'un organe de transport (12) sur une chaîne (16) d'un transporteur à chaîne formée de maillons de chaîne (14a, 14b, 14c), comprenant deux éléments entraîneurs (18a, 18b) qui sont reliés entre eux de manière détachable par un élément de liaison (20), chacun des éléments entraîneurs (18a, 18b) présentant une portion de fixation (22) qui peut être fixée sur l'organe de transport (12) et une corne entraîneuse (24) qui peut être placée contre un maillon de chaîne (14a),
dans lequel
la corne entraîneuse (24) présente une surface d'appui (50) incurvée qui est réalisée pour s'appuyer contre une portion incurvée (48) du maillon de chaîne (14a),
chaque élément entraîneur (18a, 18b) présente une portion de liaison (26), lesdites portions étant formées de façon complémentaire l'une par rapport à l'autre,
dans l'état relié des éléments entraîneurs (18a, 18b), les portions de liaison (26) de formes complémentaires constituent au moins une ouverture de réception (82) et/ou une portion d'ouverture de réception (102) pour insérer l'élément de liaison (20),
**caractérisé en ce que**
un renfoncement concave (52) est ménagé dans la surface d'appui (50) et est réalisé de telle sorte que la portion incurvée (48) se trouve dans le renfoncement (52) par coopération de forme et sans jeu, et **en ce que** la portion de fixation (22) présente un renfoncement (94) destiné à l'appui par coopération de forme d'une portion droite du maillon de chaîne (14a).

2. Entraîneur selon la revendication 1,
**caractérisé en ce qu'**un rayon de courbure (R_{K}) du renfoncement concave (52) correspond à un rayon (R) de la portion incurvée (48) du maillon de chaîne (14a).

3. Entraîneur selon la revendication 1 ou 2,
**caractérisé en ce que**
l'élément de liaison (20) est un élément à ressort et/ou une broche (104).

4. Entraîneur selon l'une des revendications précédentes,
**caractérisé en ce que** chaque portion de liaison (26) présente au moins une surface de soutien (80a, 80b), et dans l'état relié des éléments entraîneurs (18a, 18b), les surfaces de soutien (80a, 80b) se font face et/ou s'appuient l'une contre l'autre.

5. Entraîneur selon l'une des revendications précédentes,
**caractérisé en ce que**, dans l'état relié des éléments entraîneurs (18a, 18b), les portions de liaison (26) s'engagent par coopération de forme l'une dans l'autre.

6. Entraîneur selon l'une des revendications précédentes,
**caractérisé en ce que** chaque portion de liaison (26) présente au moins une branche (58, 60) s'étendant parallèlement à une portion droite (62) du maillon de chaîne (14a), lesdites branches formant, à l'état relié, l'ouverture de réception (82) et/ou la portion d'ouverture de réception (102) pour insérer l'élément de liaison (20).

7. Entraîneur selon l'une des revendications précédentes,
**caractérisé en ce que** l'une des portions de liaison (26) présente une saillie (96) et l'autre portion de liaison (26) présente un évidement (98) correspondant à la saillie (96), la saillie (96) s'engageant dans l'évidement (98) dans l'état relié des éléments entraîneurs (18a, 18b).

8. Entraîneur selon l'une des revendications précédentes,
**caractérisé en ce que** corne entraîneuse (24) présente un contour en forme de toit (56) sur un côté (54) détourné de la surface d'appui (50).

9. Entraîneur selon l'une des revendications précédentes,
**caractérisé en ce que** la portion de fixation (22) présente un dispositif de fixation (28) pour fixer la portion de fixation (22) à l'organe de transport (12).

10. Entraîneur selon la revendication 9,
**caractérisé en ce que** le dispositif de fixation (28) présente une échancrure (30) dans laquelle un élément de fixation peut être inséré de manière bloquée à l'encontre d'une rotation.

11. Entraîneur selon la revendication 10,
**caractérisé en ce qu'**un alésage (34) pour le passage d'un élément de fixation mène jusque dans l'échancrure (30).

12. Entraîneur selon la revendication 10 ou 11,
**caractérisé en ce que** l'échancrure (30) est réalisée sous forme de six pans creux (32).

13. Entraîneur selon l'une des revendications précédentes,
**caractérisé en ce que** les éléments entraîneurs (18a, 18b) sont réalisés en une seule pièce.

14. Entraîneur selon l'une des revendications précédentes,
**caractérisé en ce que** les éléments entraîneurs (18a, 18b) sont réalisés en métal ou en matière plastique.
